# EUROPÄISCHE PATENTSCHRIFT

(11) **EP 1 099 041 B1**
(45) Veröffentlichungstag und Bekanntmachung des Hinweises auf die Patenterteilung: **03.12.2003**
(21) Anmeldenummer: 99945899.5
(22) Anmeldetag: 02.07.1999
(51) Int. Cl.: F01K 23/06, F02C 3/28

(54) **GAS- UND DAMPFTURBINENANLAGE**
GAS AND STEAM TURBINE INSTALLATION
INSTALLATION A TURBINE A GAZ ET A TURBINE A VAPEUR

(30) Priorität: 17.07.1998 DE 19832294
(43) Veröffentlichungstag der Anmeldung: 16.05.2001
(73) Patentinhaber: SIEMENS AKTIENGESELLSCHAFT, 80333 München (DE)
(72) Erfinder: SCHIFFERS, Ulrich, D-90542 Eckental (DE); HANNEMANN, Frank, D-91080 Spardorf (DE)
(86) Internationale Anmeldenummer: DE9902058
(87) Internationale Veröffentlichungsnummer: WO00004285

(56) Entgegenhaltungen:
- EP-A- 0 215 330
- HAUPT G: "EFFIZIENTE UND UMWELTFREUNDLICHE STROMERZEUGUNG IM GUD-KRAFTWERK MIT INTEGRIERTER VERGASUNG" ELEKTROTECHNIK UND INFORMATIONSTECHNIK,AT,SPRINGER VERLAG, WIEN, Bd. 113, Nr. 2, Seite 102-108 XP000555695 ISSN: 0932-383X

## Beschreibung

Die Erfindung betrifft eine Gas- und Dampfturbinenanlage mit einem der Gasturbine rauchgasseitig nachgeschalteten Abhitzedampferzeuger, dessen Heizflächen in den Wasser-Dampf-Kreislauf der Dampfturbine geschaltet sind, und mit einer der Brennkammer der Gasturbine vorgeschalteten Vergasungseinrichtung für Brennstoff.

Eine Gas- und Dampfturbinenanlage mit integrierter Vergasung von fossilem Brennstoff umfaßt üblicherweise eine Vergasungseinrichtung für den Brennstoff, die ausgangsseitig über eine Anzahl von zur Gasreinigung vorgesehenen Komponenten mit der Brennkammer der Gasturbine verbunden ist. Der Gasturbine kann dabei rauchgasseitig ein Abhitzedampferzeuger nachgeschaltet sein, dessen Heizflächen in den Wasser-Dampf-Kreislauf der Dampfturbine geschaltet sind. Eine derartige Anlage ist beispielsweise aus der GB-A 2 234 984 bekannt.

Weiterhin ist aus der DE 33 31 152 ein Verfahren zum Betrieb einer eine Brennstoffvergasungsanlage aufweisenden Gasturbinenanlage bekannt, bei dem die in einer Luftzerlegungsanlage anfallende sauerstoffarme Luft dem einer Brennstoffvergasungsanlage gelieferten mittelchalorischen Brenngas beigemischt wird und das niederchalorische Brenngas-Luft-Gemisch der Brennkammer der Gasturbinenanlage zugeführt wird. Dabei versorgt der Verdichter der Gasturbinenanlage außer der Brennkammer auch die Luftzerlegungsanlage mit Luft. Aus der US 4,677,829 und der US 4,697,415 ist es bekannt, verdichtete Luft aus einem Luftverdichter mit Hilfe von Wärmetauschern zu kühlen.

Für eine zuverlässige Reinigung des vergasten fossilen Brennstoffs ist bei dieser Anlage eine Vorrichtung zur Entfernung schwefelhaltiger Bestandteile vorgesehen. Dieser Vorrichtung ist in einer in die Brennkammer mündenden Zuführungsleitung für den vergasten Brennstoff ein Sättiger nachgeschaltet, in dem der vergaste Brennstoff zur Reduktion des Schadstoffausstoßes mit Wasserdampf beladen wird. Dazu durchströmt der vergaste Brennstoff den Sättiger im Gegenstrom zu einem Wasserstrom, der in einem als Sättigerkreislauf bezeichneten Wasserkreislauf geführt ist. Für einen besonders hohen Wirkungsgrad ist dabei eine Einkopplung von Wärme aus dem Wasser-Dampf-Kreislauf in den Sättigerkreislauf vorgesehen.

Der Vergasungseinrichtung einer derartigen Gas- und Dampfturbinenanlage ist zusätzlich zu dem fossilen Brennstoff auch der zur Vergasung des Brennstoffs erforderliche Sauerstoff zuführbar. Zur Gewinnung dieses Sauerstoffs aus Luft ist üblicherweise eine der Vergasungseinrichtung vorgeschaltete Luftzerlegungsanlage vorgesehen. Die Luftzerlegungsanlage kann dabei mit einem auch als Entnahmeluft bezeichneten Teilstrom von in einem der Gasturbine zugeordneten Luftverdichter verdichteter Luft beaufschlagt sein.

Infolge des Verdichtungsprozesses weist die aus dem Verdichter abströmende Luft ein vergleichsweise hohes Temperaturniveau auf. Deshalb ist üblicherweise eine Abkühlung des auch als Entnahmeluft bezeichneten Teilstroms der verdichteten Luft vor dessen Eintritt in die Luftzerlegungsanlage erforderlich. Die der Entnahmeluft dabei entzogene Wärme wird üblicherweise zur Wärmerückgewinnung und somit zur Erzielung eines hohen Anlagenwirkungsgrades auf den Sättigerkreislauf übertragen. Je nach Betriebszustand der Anlage ist bei einer derartigen Auslegung dann nur noch eine Restkühlung der Entnahmeluft vor ihrem Eintritt in die Luftzerlegungsanlage mittels Kühlwasser erforderlich.

Ein derartiges Konzept zur Kühlung der Entnahmeluft setzt jedoch voraus, daß das Wärmeangebot bei der Luftkühlung und der Wärmebedarf im Sättigerkreislauf hinreichend gut aufeinander abgestimmt sind. Eine derartige Entnahmeluftkühlung ist somit - abhängig vom Integrationskonzept, also abhängig von der Art der Luftversorgung für die Luftzerlegungsanlage und den dabei eingesetzten Komponenten - nicht universell einsetzbar und bei manchen Betriebszuständen der Gas- und Dampfturbinenanlage nur bedingt zuverlässig.

In der Druckschrift Haupt G.: "Effiziente und umweltfreundliche Stromerzeugung im GUD-Kraftwerk mit integrierter Vergasung" Elektrotechnik und Informationstechnik, AT, Springer Verlag, Wien, Bd. 113, Nr. 2, Seite 102-108 XP000555695 ISSN: 0932-383X wird eine Gas- und Dampfturbinenanlage offenbart mit einem der Gasturbine rauchgasseitigen Abhitzedampferzeuger, wobei dessen Heizfläche in den Wasser-Dampf-Kreislauf der Dampfturbine geschaltet sind. Weiterhin ist eine Vergasungsanlage für Brennstoff offenbart, welche einer Brennkammer der Gasturbine vorgeschaltet ist, wobei der Vergasungsanlage Sauerstoff aus einer Luftzerlegungsanlage zuführbar ist.

Der Erfindung liegt daher die Aufgabe zugrunde, eine Gas- und Dampfturbinenanlage der oben genannten Art anzugeben, bei der unabhängig vom zugrundegelegten Integrationskonzept bei allen Betriebszuständen eine zuverlässige Kühlung der Entnahmeluft bei besonders einfacher Bauweise gewährleistet ist.

Diese Aufgabe wird erfindungsgemäß gelöst, indem zur Kühlung des Teilstroms verdichteter Luft in eine den Luftverdichter mit der Luftzerlegungsanlage verbindende Entnahmeluftleitung primärseitig ein als Verdampfungskühler ausgebildeter Wärmetauscher geschaltet ist, der sekundärseitig zur Bildung eines Verdampferumlaufs für ein Strömungsmedium an eine Wasser-Dampf-Trommel angeschlossen ist.

Die Erfindung geht dabei von der Überlegung aus, daß für eine unabhängig vom Integrationskonzept und vom zu vergasenden Brennstoff einsetzbare und bei allen Betriebszuständen zuverlässige Entnahmeluftkühlung die der Entnahmeluft entzogene Wärme unabhängig von einem fest vorgegebenen Wärmebedarf abführbar sein sollte. Die Entnahmeluftkühlung sollte somit von der Wärmezufuhr in den Sättigerkreislauf entkoppelt sein. Die Kühlung der Entnahmeluft erfolgt stattdessen durch Wärmetausch mit einem Strömungsmedium. Für eine besonders hohe betriebliche Stabilität bei einfacher Bauweise und für eine günstige Einkopplung der der Entnahmeluft entzogenen Wärme in den Anlagenprozeß ist dabei eine Verdampfung des Strömungsmediums vorgesehen, wobei der Wärmetauscher als Mitteldruckverdampfer ausgebildet ist.

Für eine besonders flexible und an verschiedene Betriebszustände auf einfache Weise anpaßbare Kühlung der Entnahmeluft ist dem Wärmetauscher in der Entnahmeluftleitung vorteilhafterweise ein weiterer sekundärseitig als Verdampfer für ein Strömungsmedium ausgebildeter Wärmetauscher nachgeschaltet, wobei der weitere Wärmetauscher als Niederdruckverdampfer ausgebildet ist.

Der als Mitteldruckverdampfer ausgebildete Wärmetauscher ist dabei zweckmäßigerweise strömungsmediumseitig mit einer einer Mitteldruckstufe der Dampfturbine zugeordneten Heizfläche im Abhitzedampferzeuger verbunden. Der als Niederdruckverdampfer ausgebildete Wärmetauscher kann in analoger Anordnung strömungsmediumseitig mit einer einer Niederdruckstufe der Dampfturbine zugeordneten Heizflächen im Abhitzedampferzeuger verbunden sein. Zweckmäßigerweise ist der als Niederdruckverdampfer ausgebildete Wärmetauscher jedoch strömungsmediumseitig an einen Dampf-Nebenverbraucher, beispielsweise an die Vergasungseinrichtung oder an ein dieser nachgeschaltetes System zur Gasaufbereitung, angeschlossen. Bei einer derartigen Anordnung ist auf besonders einfache Weise eine zuverlässige Bespeisung des Nebenverbrauchers mit Prozeßdampf oder mit Heizdampf gewährleistet.

In weiterer vorteilhafter Ausgestaltung ist der oder jeder Wärmetauscher sekundärseitig zur Bildung eines Verdampferumlaufs jeweils an eine Wasser-Dampf-Trommel angeschlossen.

Der Verdampferumlauf kann dabei als Zwangsumlauf ausgebildet sein. In besonders vorteilhafter Ausgestaltung ist der jeweilige Verdampferumlauf jedoch als Naturumlauf ausgebildet, wobei ein Umlauf des Strömungsmediums durch sich beim Verdampfungsprozeß einstellende Druckdifferenzen und/oder durch die geodätische Anordnung von Verdampfer und Wasser-Dampf-Trommel gewährleistet ist. Bei einer derartigen Anordnung ist lediglich eine vergleichsweise gering dimensionierte Umwälzpumpe zum Anfahren des Verdampferumlaufs erforderlich. Die jeweilige Wasser-Dampf-Trommel ist dabei zweckmäßigerweise mit einer Anzahl der im Abhitzedampferzeuger angeordneten Heizflächen verbunden.

Dem Wärmetauscher ist in der Entnahmeluftleitung vorteilhafterweise ein zusätzlicher Wärmetauscher nachgeschaltet, der sekundärseitig an einen dem Abhitzedampferzeuger zugeordneten Speisewasserbehälter angeschlossen ist. Mit einer derartigen Anordnung ist eine besonders günstige und vom Integrationskonzept unabhängige Wärmeeinkopplung in den Sättigerkreislauf erreichbar. Die Wärmeeinkopplung in den Sättigerkreislauf kann dabei nämlich über einen Wärmetauscher erfolgen, der primärseitig von aus dem Speisewasserbehälter entnommenem vorgewärmtem Speisewasser durchströmbar ist. Das diesen Wärmetauscher verlassende, durch die Wärmeeinkopplung in den Sättigerkreislauf abgekühlte Speisewasser ist dann dem in die Entnahmeluftleitung geschalteten zusätzlichen Wärmetauscher zuführbar, wo es sich durch die weitere Kühlung der Entnahmeluft wieder aufwärmt. Eine Wärmeeinkopplung in den Sättigerkreislauf ist somit ohne größere Wärmeverluste im Speisewasser erreichbar.

Für eine zuverlässige Schaufelkühlung der Gasturbine zweigt in weiterer vorteilhafter Ausgestaltung von der Entnahmeluftleitung in Strömungsrichtung des Teilstroms gesehen nach dem Wärmetauscher bzw. nach den Wärmetauschern eine Kühlluftleitung ab, über die der Gasturbine eine Teilmenge des gekühlten Teilstroms als Kühlluft zur Schaufelkühlung zuführbar ist.

Die mit der Erfindung erzielten Vorteile bestehen insbesondere darin, daß durch die Kühlung der Entnahmeluft in einer Anzahl von als Verdampfer für ein Strömungsmedium ausgebildeten Wärmetauschern eine flexible Anpassung der Gas- und Dampfturbinenanlage an unterschiedliche Integrationskonzepte bei Erzielung eines besonders hohen Anlagenwirkungsgrades ermöglicht ist. Die Wärmeentnahme aus der Entnahmeluft über den als Verdampfer ausgebildeten Wärmetauscher ist dabei unabhängig vom Wärmeeintrag in den Sättigerkreislauf. Die Gas- und Dampfturbinenanlage ist somit auch bei verschiedenen Betriebszuständen besonders zuverlässig einsetzbar. Weiterhin ermöglicht die Ausbildung der jeweiligen Wärmetauscher als Verdampfer eine besonders einfache Versorgung von Nebenverbrauchern mit Prozeßdampf oder mit Heizdampf. Als ein derartiger Nebenverbraucher kommt insbesondere die Vergasungseinrichtung oder eine dieser nachgeschaltete Komponente zur Gasaufbereitung in Betracht. Aufgrund der vergleichsweise hohen Speicherkapazität des jeweiligen Verdampferumlaufs führen dabei auch schwankende Abnahmemengen an Prozeßdampf oder Heizdampf durch die jeweiligen Nebenverbraucher nicht zu betrieblichen Störungen.

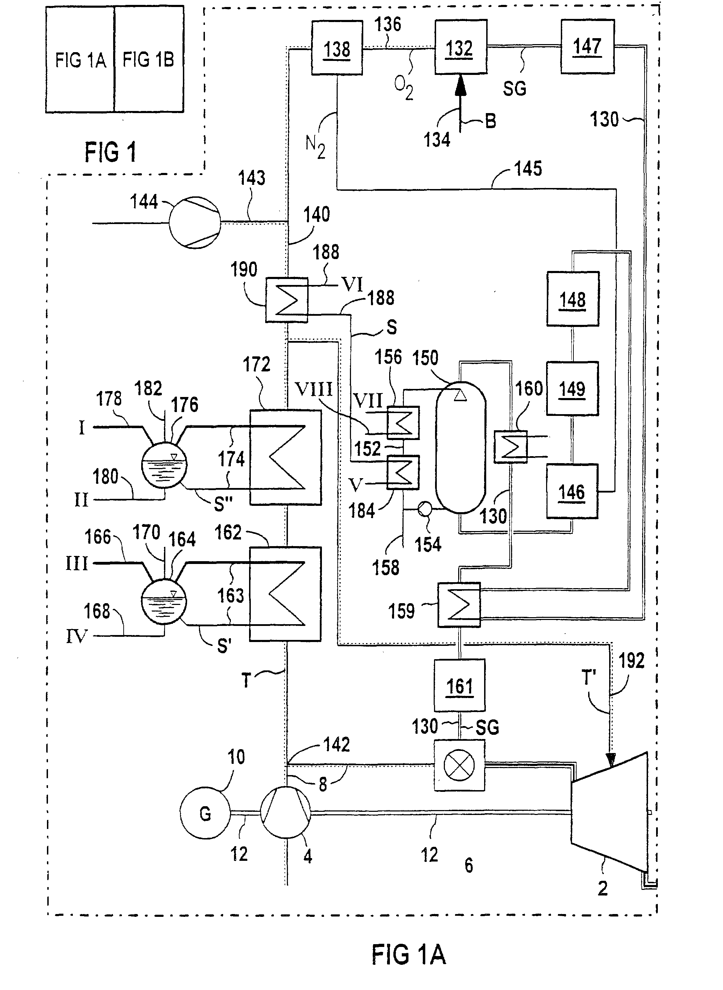

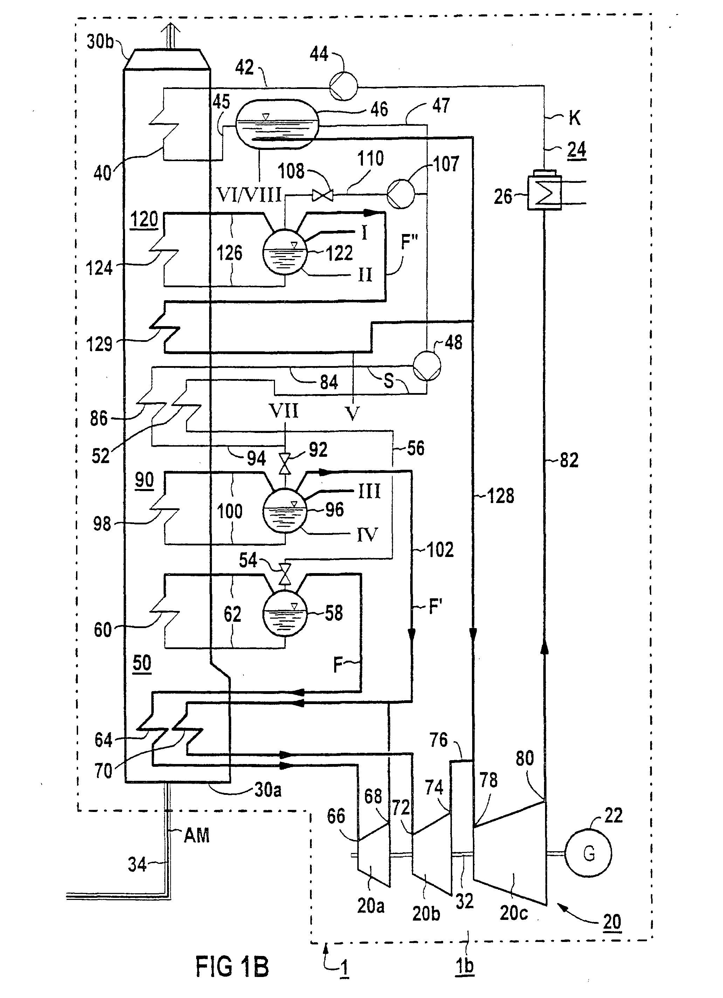

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme angeschlossen.

Die Hochdruckspeisepumpe 48 bringt das aus dem Speisewasserbehälter 46 abströmende Speisewasser S auf ein für eine dem Hochdruckteil der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteil 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlaß 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfaßt eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F'' ist die Niederdrucktrommel 122 über eine Dampfleitung 128, in die ein Niederdrucküberhitzer 129 geschaltet ist, an die Überströmleitung 76 angeschlossen. Der Wasser-Dampf-Kreislauf 24 der Gas- und Dampfturbinenanlage 1 umfaßt im Ausführungsbeispiel somit drei Druckstufen 50, 90, 120. Alternativ können aber auch weniger, insbesondere zwei, Druckstufen vorgesehen sein.

Die Gasturbinenanlage 1a ist für den Betrieb mit einem vergasten Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Dazu ist die Brennkammer 6 der Gasturbine 2 eingangsseitig über eine Brennstoffleitung 130 an eine Vergasungseinrichtung 132 angeschlossen. Der Vergasungseinrichtung 132 ist über ein Eintragssystem 134 Kohle oder Öl als fossiler Brennstoff B zuführbar.

Zur Bereitstellung des für die Vergasung des fossilen Brennstoffs B benötigten Sauerstoffs O₂ ist der Vergasungseinrichtung 132 über eine Sauerstoffleitung 136 eine Luftzerlegungsanlage 138 vorgeschaltet. Die Luftzerlegungsanlage 138 ist eingangsseitig mit einem Teilstrom T der im Luftverdichter 4 verdichteten Luft beaufschlagbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist. Im Ausführungsbeispiel setzt sich somit der der Luftzerlegungsanlage 138 zuströmende gesamte Luftstrom L zusammen aus dem von der Druckluftleitung 8 abgezweigten Teilstrom T und aus dem vom zusätzlichen Luftverdichter 144 geförderten Luftstrom. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 143 mitsamt dem zusätzlichen Luftverdichter 144 auch entfallen, so daß die Bespeisung der Luftzerlegungsanlage 138 mit Luft vollständig über den der Druckluftleitung 8 entnommenen Teilstrom T erfolgt.

Der in der Luftzerlegungsanlage 138 bei der Zerlegung des-Luftstroms L zusätzlich zum Sauerstoff O₂ gewonnene Stickstoff N₂ wird über eine an die Luftzerlegungsanlage 138 angeschlossene Stickstoffleitung 145 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas SG ausgebildet.

Das von der Vergasungseinrichtung 132 abströmende Synthesegas SG gelangt über die Brennstoffleitung 130 zunächst in einen Rohgas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Rohgas-Abhitzedampferzeuger 147 und vor der Mischvorrichtung 146 sind in die Brennstoffleitung 130 eine Entstaubungseinrichtung 148 für das Synthesegas SG sowie eine Entschwefelungsanlage 149 geschaltet. In alternativer Ausgestaltung kann anstelle der Enstaubungseinrichtung 148, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 6 ist eine Beladung des vergasten Brennstoffs mit Wasserdampf vor Eintritt in die Brennkammer 6 vorgesehen. Diese kann in wärmetechnisch besonders vorteilhafter Weise in einem Sättigersystem erfolgen. Dazu ist in die Brennstoffleitung 130 ein Sättiger 150 geschaltet, in dem der vergaste Brennstoff im Gegenstrom zu aufgeheiztem Sättigerwasser geführt ist. Das Sättigerwasser zirkuliert dabei in einem an den Sättiger 150 angeschlossenen Sättigerkreislauf 152, in den eine Umwälzpumpe 154 sowie zur Vorheizung des Sättigerwassers ein Wärmetauscher 156 geschaltet sind. Der Wärmetauscher 156 ist dabei primärseitig mit vorgewärmtem Speisewasser aus der Mitteldruckstufe 90 des Wasser-Dampf-Kreislaufs 24 beaufschlagt. Zum Ausgleich der bei der Sättigung des vergasten Brennstoffs auftretenden Verluste an Sättigerwasser ist an den Sättigerkreislauf 152 eine Einspeiseleitung 158 angeschlossen.

In Strömungsrichtung des Synthesegases SG gesehen hinter dem Sättiger 150 ist in die Brennstoffleitung 130 sekundärseitig ein als Rohgas-Reingas-Wärmetauscher wirkender Wärmetauscher 159 geschaltet. Der Wärmetauscher 159 ist dabei primärseitig an einer Stelle vor der Entstaubungsanlage 148 ebenfalls in die Brennstoffleitung 130 geschaltet, so daß das der Entstaubungsanlage 148 zuströmende Synthesegas SG einen Teil seiner Wärme auf das aus dem Sättiger 150 abströmende Synthesegas SG überträgt. Die Führung des Synthesegases SG über den Wärmetauscher 159 vor Eintritt in die Entschwefelungsanlage 149 kann dabei auch bei einem hinsichtlich der anderen Komponenten abgeänderten Schaltungskonzept vorgesehen sein.

Zwischen den Sättiger 150 und den Wärmetauscher 159 ist in die Brennstoffleitung 130 sekundärseitig ein weiterer Wärmetauscher 160 geschaltet, der primärseitig speisewasserbeheizt oder auch dampfbeheizt sein kann. Durch den als Rohgas-Reingas-Wärmetauscher ausgebildeten Wärmetauscher 159 und den Wärmetauscher 160 ist dabei eine besonders zuverlässige Vorwärmung des der Brennkammer 6 der Gasturbine 2 zuströmenden Synthesegases SG auch bei verschiedenen Betriebszuständen der Gas- und Dampturbinenanlage 1 gewährleistet.

Zur bedarfsweisen Beaufschlagung des der Brennkammer 6 zuströmenden Synthesegases SG mit Dampf ist in die Brennstoffleitung 130 zudem eine weitere Mischvorrichtung 161 geschaltet, der Mitteldruck-Dampf über eine nicht näher dargestellte Dampfleitung zuführbar ist, insbesondere zur Sicherung eines zuverlässigen Gasturbinenbetriebs bei betrieblichen Störfällen.

Zur Kühlung des der Luftzerlegungsanlage 138 zuzuführenden, auch als Entnahmeluft bezeichneten Teilstroms T verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 164 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms T verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S'' ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der als Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozeßdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangumlauf ausgebildet sein, wobei der Umlauf des Strömungsmedium S' bzw. S " durch eine Umwälzpumpe gewährleistet ist, und wobei das Strömungsmedium S', S'' im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw. S " durch die sich beim Verdampfungsprozeß einstellenden Druckdifferenzen und/oder durch die geodätische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine (nicht dargestellte) vergleichsweise gering dimensionierte Umwälzpumpe zum Anfahren des Systems geschaltet.

Zur Wärmeeinkopplung in den Sättigerkreislauf 152 ist zusätzlich zum Wärmetauscher 156, der mit aufgeheiztem, nach dem Speisewasservorwärmer 86 abgezweigtem Speisewasser beaufschlagbar ist, ein Sättigerwasser-Wärmetauscher 184 vorgesehen, der primärseitig mit Speisewasser S aus dem Speisewasserbehälter 46 beaufschlagbar ist. Dazu ist der Sättigerwasser-Wärmetauscher 184 primärseitig eingangsseitig über eine Leitung 186 an die Zweigleitung 84 und ausgangsseitig über eine Leitung 188 an den Speisewasserbehälter 46 angeschlossen. Zur Wiederaufheizung des aus dem Sättigerwasser-Wärmetauscher 184 abströmenden gekühlten Speisewassers S ist in die Leitung 188 ein zusätzlicher Wärmetauscher 190 geschaltet, der primärseitig dem Wärmetauscher 172 in der Entnahmeluftleitung 140 nachgeschaltet ist. Durch eine derartige Anordnung ist eine besonders hohe Wärmerückgewinnung aus der Entnahmeluft und somit ein besonders hoher Wirkungsgrad der Gas- und Dampfturbinenanlage 1 erreichbar.

In Strömungsrichtung des Teilstroms T gesehen zwischen dem Wärmetauscher 172 und dem Wärmetauscher 190 zweigt von der Entnahmeluftleitung 140 eine Kühlluftleitung 192 ab, über die der Gasturbine 2 eine Teilmenge T' des gekühlten Teilstroms T als Kühlluft zur Schaufelkühlung zuführbar ist.

Durch die Ausbildung der Wärmetauscher 162 und 172 als Mitteldruckverdampfer bzw. als Niederdruckverdampfer ist eine zuverlässige Kühlung der Entnahmeluft auch bei verschiedenen Betriebszuständen der Gas- und Dampfturbinenanlage 1 und auch bei unterschiedlichen Integrationskonzepten für die Vergasung des fossilen Brennstoffs B gewährleistet. Das Konzept der Entnahmeluftkühlung durch die Einschaltung der als Verdampfungskühler ausgebildeten Wärmetauscher 162 und 172 in die Entnahmeluftleitung 140 ist somit auch für verschiedenartige fossile Brennstoffe B besonders geeignet. Insbesondere aufgrund der Vielzahl einstellbarer Dampfparameter in den Verdampferumläufen 163 und 174 ist eine derartige Entnahmeluftkühlung besonders flexibel an verschiedenartige Anforderungen beim Betrieb der Gas- und Dampfturbinenanlage 1 anpaßbar.

## Patentansprüche

1. Gas- und Dampfturbinenanlage (1) mit einem der Gasturbine rauchgasseitig nachgeschalteten Abhitzedampferzeuger (30), dessen Heizflächen in den Wasser-Dampf-Kreislauf (24) der Dampfturbine (20) geschaltet sind, und mit einer der Brennkammer (6) der Gasturbine (2) vorgeschalteten Vergasungseinrichtung (132) für Brennstoff (B), der Sauerstoff (O₂) aus einer Luftzerlegungsanlage (138) zuführbar ist,
**dadurch gekennzeichnet, daß** die Luftzerlegungsanlage 138) eingangsseitig mit einem Teilstrom (T) von in einem der Gasturbine (2) zugeordneten Luftverdichter (4) verdichteter Luft beaufschlagbar ist, wobei zur Kühlung des Teilstroms (T) verdichteter Luft in eine den Luftverdichter (4) mit der Luftzerlegungsanlage (138) verbindende Entnahmeluftleitung (140) primärseitig ein als Verdampfungskühler ausgebildeter Wärmetauscher (162) geschaltet ist, der sekundärseitig zur Bildung eines Verdampferumlaufs (163) für ein Strömungsmedium (S') an eine Wasser-Dampf-Trommel (164) angeschlossen ist.

2. Gas- und Dampfturbinenanlage (1) nach Anspruch 1,
**dadurch gekennzeichnet, daß** dem Wärmetauscher (162) in der Entnahmeluftleitung (140) ein weiterer sekundärseitig als Verdampfer für ein Strömungsmedium (S'') ausgebildeter Wärmetauscher (172) nachgeschaltet ist, wobei der Wärmetauscher (162) als Mitteldruckverdampfer und der weitere Wärmetauscher (172) als Niederdruckverdampfer ausgebildet ist.

3. Gas- und Dampfturbinenanlage (1) nach Anspruch 1 oder 2,
**dadurch gekennzeichnet, daß** der Wärmetauscher (172) sekundärseitig zur Bildung eines Verdampferumlaufs (174) an eine Wasser-Dampf-Trommel (176) angeschlossen ist.

4. Gas- und Dampfturbinenanlage (1) nach Anspruch 3,
**dadurch gekennzeichnet, daß** die oder jede Wasser-Dampf-Trommel (164, 176) mit einer Anzahl der im Abhitzedampferzeuger (30) angeordneten Heizflächen (98, 124) verbunden ist.

5. Gas- und Dampfturbinenanlage (1) nach einem der Ansprüche 1 bis 4, **dadurch gekennzeichnet, daß** dem Wärmetauscher (162) in der Entnahmeluftleitung (140) ein zusätzlicher Wärmetauscher (190) nachgeschaltet ist, der sekundärseitig an einen dem Abhitzedampferzeuger (30) zugeordneten Speisewasserbehälter (46) angeschlossen ist.

6. Gas- und Dampfturbinenanlage (1) nach einem der Ansprüche 1 bis 5, **dadurch gekennzeichnet, daß** von der Entnahmeluftleitung (140) in Strömungsrichtung des Teilstroms (T) gesehen nach dem Wärmetauscher (162) bzw. nach den Wärmetauschern (162, 172) eine Kühlluftleitung (192) abzweigt, über die der Gasturbine eine Teilmenge (T') des gekühlten Teilstroms (T) als Kühlluft zur Schaufelkühlung zuführbar ist.

## Claims

1. Gas- and steam-turbine plant (1) having a heat-recovery steam generator (30), which is connected downstream of the gas turbine on the flue-gas side and whose heating surfaces are connected in the water/steam circuit (24) of the steam turbine (20), and having a gasifier (132) for fuel (B), which gasifier (132) is connected upstream of the combustion chamber (6) of the gas turbine (2) and to which oxygen (O₂) can be fed from an air-separation unit (138), **characterized in that** a partial flow (T) of air compressed in an air compressor (4) assigned to the gas turbine (2) can be admitted to the air-separation unit (138) on the inlet side, a heat exchanger (162), designed as an evaporative cooler, in order to cool the partial flow (T) of compressed air, being connected on the primary side in a bleed-air line (140) connecting the air compressor (4) to the air-separation unit (138), which heat exchanger (162) is connected on the secondary side to a water/steam drum (164) in order to form an evaporator circulation (163) for a flow medium (S').

2. Gas- and steam-turbine plant (1) according to Claim 1, **characterized in that** a further heat exchanger (172), designed on the secondary side as an evaporator for a flow medium (S''), is connected downstream of the heat exchanger (162) in the bleed-air line (140), the heat exchanger (162) being designed as an intermediate-pressure evaporator and the further heat exchanger (172) being designed as a low-pressure evaporator.

3. Gas- and steam-turbine plant (1) according to Claim 1 or 2, **characterized in that** the heat exchanger (172) is connected on the secondary side to a water/steam drum (176) in order to form an evaporator circulation (174).

4. Gas- and steam-turbine plant (1) according to Claim 3, **characterized in that** the or each water/steam drum (164, 176) is connected to a number of heating surfaces (98, 124) arranged in the heat-recovery steam generator (30).

5. Gas- and steam-turbine plant (1) according to one of Claims 1 to 4, **characterized in that** an additional heat exchanger (190) is connected downstream of the heat exchanger (162) in the bleed-air line (140), which additional heat exchanger (190) is connected on the secondary side to a feedwater tank (46) assigned to the heat-recovery steam generator (30).

6. Gas- and steam-turbine plant (1) according to one of Claims 1 to 5, **characterized in that** a cooling-air line (192) branches off from the bleed-air line (140) downstream of the heat exchanger (162) or downstream of the heat exchangers (162, 172) as viewed in the direction of flow of the partial flow (T), via which cooling-air line (192) a partial quantity (T') of the cooled partial flow (T) can be fed as cooling air to the gas turbine in order to cool the blades.

## Revendications

1. Installation (1) à turbine à gaz et à turbine à vapeur, comprenant un générateur (30) de vapeur à récupération de la chaleur perdue, qui est monté en aval du côté des gaz de fumée de la turbine à gaz et dont les surfaces de chauffe sont montées dans le circuit (24) eau-vapeur de la turbine (20) à vapeur et un dispositif (132) de gazéification de combustible (B), qui est monté en amont de la chambre de combustion (6) de la turbine (2) à gaz et auquel de l'oxygène (O₂) d'une installation (138) de fractionnement de l'air peut être envoyé,
**caractérisée en ce que** l'installation (138) de fractionnement de l'air peut être alimentée du côté de l'entrée par un courant partiel (T) d'air comprimé dans un compresseur (4) associé à la turbine (2) à gaz, un échangeur de chaleur (162), constitué du côté primaire sous la forme d'un dispositif de refroidissement à évaporation étant, pour le refroidissement du courant partiel (T) d'air comprimé, monté dans un conduit (140) de prélèvement d'air, mettant le compresseur (4) d'air en communication avec l'installation (138) de fractionnement de l'air, de l'échangeur de chaleur étant raccordé du côté secondaire, pour la formation d'un circuit (163) d'évaporateur pour un fluide (S') en écoulement, à un ballon (164) eau-vapeur.

2. Installation (1) à turbine à gaz et à turbine à vapeur suivant la revendication 1,
**caractérisée en ce qu'**il est monté, en aval de l'échangeur de chaleur (162) dans le conduit (140) de prélèvement d'air, un autre échangeur de chaleur (172) constitué du côté secondaire sous la forme d'un évaporateur pour un fluide (S") en écoulement, l'échangeur de chaleur (162) étant constitué en évaporateur moyenne pression et l'autre échangeur (172) en évaporateur basse pression.

3. Installation (1) à turbine à gaz et à turbine à vapeur suivant la revendication 1 ou 2,
**caractérisée en ce que** l'échangeur de chaleur (172) est raccordé du côté secondaire, pour la formation d'un circuit (174) évaporateur, à un ballon (176) eau-vapeur.

4. Installation (1) à turbine à gaz et à turbine à vapeur suivant la revendication 3,
**caractérisée en ce que** le ou chaque ballon (164, 176) eau-vapeur communique avec un certain nombre de surfaces (98, 124) de chauffe disposées dans le générateur (30) de vapeur à récupération de la chaleur perdue.

5. Installation (1) à turbine à gaz et à turbine à vapeur suivant l'une des revendications 1 à 4, **caractérisée en ce qu'**il est monté, en aval de l'échangeur de chaleur (162) dans le conduit (140) de prélèvement d'air, un échangeur de chaleur (190) supplémentaire qui est relié du côté secondaire à une cuve (46) d'eau d'alimentation associée au générateur (30) de vapeur à récupération de la chaleur perdue.

6. Installation (1) à turbine à gaz et à turbine à vapeur suivant l'une des revendications 1 à 5, **caractérisée en ce qu'**il part en dérivation du conduit (140) de prélèvement d'air, après l'échangeur de chaleur (162) ou après les échangeurs de chaleur (162, 172), tel que considéré dans le sens d'écoulement du courant (T) partiel, un conduit (192) d'air de refroidissement par lequel il peut être envoyé à la turbine à gaz une quantité (T') partielle du courant (T) partiel refroidi, en tant qu'air de refroidissement pour le refroidissement des aubes.
